# EUROPÄISCHE PATENTSCHRIFT

(11) **EP 3 374 241 B1**
(45) Veröffentlichungstag und Bekanntmachung des Hinweises auf die Patenterteilung: **17.04.2024**
(21) Anmeldenummer: 16787420.5
(22) Anmeldetag: 25.10.2016
(51) Int. Cl.: B60W 40/06, B60W 40/09, B60W 50/00

(54) **VERFAHREN, VORRICHTUNG UND VERARBEITUNGSEINRICHTUNG ZUM STEUERN VON FUNKTIONEN IN EINEM FAHRZEUG**
METHOD, APPARATUS, AND PROCESSING DEVICE FOR CONTROLLING FUNCTIONS IN A VEHICLE
PROCÉDÉ, SYSTÈME ET DISPOSITIF DE TRAITEMENT PERMETTANT DE COMMANDER DES FONCTIONS DANS UN VÉHICULE

(30) Priorität: 12.11.2015 DE 102015222307; 20.01.2016 DE 102016200759
(43) Veröffentlichungstag der Anmeldung: 19.09.2018
(73) Patentinhaber: Volkswagen Aktiengesellschaft, 38440 Wolfsburg (DE)
(72) Erfinder: HEINZE, Theodor, 38350 Helmstedt (DE); BENSCHEID, Thomas, 14089 Berlin (DE); ADAMEK, Jochen, 13595 Berlin (DE); FLIEGNER, Jens, 29399 Wahrenholz (DE)
(86) Internationale Anmeldenummer: PCT/EP2016/075622
(87) Internationale Veröffentlichungsnummer: WO 2017/080811

(56) Entgegenhaltungen:
- EP-A1- 2 778 007
- WO-A1-2013/158083
- DE-A1-102013 220 453
- DE-A1-102014 118 256
- US-A1- 2012 158 276
- US-A1- 2015 166 072

## Beschreibung

Die vorliegende Anmeldung betrifft ein Verfahren, eine Vorrichtung und eine Verarbeitungseinrichtung zum Steuern von Funktionen in einem Fahrzeug.

In einem Fahrzeug können eine Vielzahl von Funktionen angesteuert werden, die von einem Fahrverhalten eines Fahrers und von äußeren Umständen abhängig sind.

Beispielsweise kann in einem Fahrzeug ein Fahrerassistenzsystem bereitgestellt sein, das elektronische Zusatzeinrichtungen in Fahrzeugen zur Unterstützung des Fahrers in bestimmten Fahrsituationen ansteuert.

Die Steuerung dieser Zusatzeinrichtungen durch das Fahrerassistenzsystem kann insbesondere auf der Fahrsituation basieren. Die Fahrsituation kann beispielsweise Witterungsbedingungen, Straßenbeschaffenheit oder Hindernisse, wie eine Baustelle auf einer Fahrstrecke umfassen und demnach für verschiedene Streckenabschnitte eine zurückzulegende Fahrstecke verschieden sein.

Um Informationen über die Fahrsituation zu erhalten ist daher u.a. die Kenntnis über die Beschaffenheit der Fahrstrecke erforderlich. Beispielsweise kann ein Fahrzeug, das einen bestimmten Abschnitt der Fahrstrecke durchfährt, hierzu feststellen, ob sich beispielsweise Hindernisse auf der Fahrstrecke befinden oder über Fahrzeugsensoren ermitteln, welche aktuellen Witterungsbedingungen vorherrschen.

Wird dies über eine Mehrzahl von Fahrzeugen ausgeführt, das heißt über eine ganze Fahrzeugflotte und für eine Vielzahl von Streckenabschnitten, kann zum Beispiel eine Karte erstellt werden, die Informationen von einer Vielzahl von Fahrstrecken umfasst.

Genaue Karten von Fahrstrecken sind zur genauen Steuerung von Fahrerassistenzsystemen von großer Bedeutung, da sie Aufschluss über den exakten Fahrbahnverlauf geben. Basierend auf solchem Kartenmaterial können Fahrerassistenzsysteme situationsabhängig angesteuert werden.

Ein entsprechendes Verfahren ist in der Druckschrift DE 10 2013 208 521 A1 beschrieben. Dieses Verfahren dient dem kollektiven Erlernen eines Straßenmodells, insbesondere einer digitalen Karte, mit einer Fahrzeugflotte, sowie zur Bereitstellung eines nach dem Verfahren hergestellten Straßenmodells.

Das in dieser Druckschrift offenbarte Verfahren dient außerdem zum Ergänzen eines Straßenmodells. Darüber hinaus wird ein Verfahren zum Aktualisieren eines Straßenmodells, ein Verfahren und eine Vorrichtung zur Eigenlokalisierung eines Fahrzeugs basierend auf einem Straßenmodell, sowie ein Verfahren zum Georeferenzieren von Merkmalen basierend auf einem Straßenmodell gemäß obiger Druckschrift bereitgestellt.

Eine Mehrzahl von Fahrzeugen Trajektorien- und Perzeptionsdaten werden dabei erfasst. Es werden Assoziierungen zwischen den Trajektorien erstellt, indem für entsprechende, zu assoziierende Trajektorienpunkte Merkmalsraster und Wahrscheinlichkeitsfeld-Merkmalsraster gebildet werden und diese korreliert, um Assoziationshypothesen zu bilden.

Basierend auf den Assoziierungen, sowie auf Basis von Odometrie- und Positionserfassungen wird ein Informationsgraph gebildet und das zugehörige Optimierungsproblem zur Schätzung optimaler Trajektorienpunkte gelöst.

Die erfassten Perzeptionsdaten werden auf Basis der geschätzten Trajektorienpunkte bewertet, aggregiert und fusioniert, um ein hochgenaues Straßenmodell zu erstellen.

Die DE 10 2011 116 245 A1 offenbart ein Verfahren zur Ermittlung aktueller, wenigstens einen zu befahrenden Streckenabschnitt beschreibender Streckeninformationen einer digitalen Karte.

Die DE 10 2014 118256 A1 offenbart ein Verfahren zum Steuern von Funktionen in einem Fahrzeug.

Durch eine Mehrzahl von Kraftfahrzeugen werden hier mittels wenigstens eines Sensors des Kraftfahrzeugs während der Fahrt Sensordaten aufgenommen, welche innerhalb der Kraftfahrzeuge zu Streckenabschnitten zugeordneten Einzelstreckeninformationen ausgewertet werden.

Die Sensordaten werden innerhalb der Kraftfahrzeuge zu Streckenabschnitten zugeordneten Einzelstreckeninformationen ausgewertet und wenigstens teilweise drahtlos an eine zentrale Datenverarbeitungseinrichtung übermittelt.

Die Datenverarbeitungseinrichtung wählt durch Plausibilisierung sich entsprechender Einzelstreckeninformationen verschiedener Kraftfahrzeuge gegeneinander in die digitale Karte aufzunehmende und/oder in der digitalen Karte zu ersetzende Streckeninformationen aus und aktualisiert die digitale Karte.

Die genannten Druckschriften offenbaren also ein Erstellen von Straßenkarten und eine Übermittelung von Sensordaten an eine Datenverarbeitungseinheit auch mittels Daten von verschiedenen Kraftfahrzeugen, welche dann in Fahrzeugen verwendet werden können.

Insbesondere für Fahrerassistenzsysteme, aber auch für andere Funktionen, wäre es aber vorteilhaft, noch weitere Informationen über Streckenabschnitte zu nutzen, um eine bessere Steuerung der Funktionen zu ermöglichen.

Es ist daher eine Aufgabe der vorliegenden Anmeldung, entsprechende Verfahren, Vorrichtungen und Systeme zur Verfügung zu stellen.

Diese Aufgabe wird gemäß der vorliegenden Erfindung mit einem Verfahren nach Anspruch 1 sowie einer Vorrichtung nach Anspruch 11 und einer Verarbeitungseinrichtung nach Anspruch 13 gelöst. Die Unteransprüche definieren weitere Ausführungsbeispiele der vorliegenden Erfindung.

Das erfindungsgemäße Verfahren zum Steuern von Funktionen in einem Fahrzeug umfasst ein Bestimmen eines Fahrverhaltens eines Fahrers und ein Bereitstellen eines Fahrverhaltens einer Vielzahl von weiteren Fahrern.

Das Fahrverhalten eines Fahrers umfasst hier allgemein das Verhalten des Fahrers im Straßenverkehr, d.h. beschreibt Parameter wie eine Geschwindigkeit, ein Beschleunigen oder ein Verzögern, welche vom Fahrer beeinflussbar sind (im Gegensatz z.B. zu einem Straßenzustand wie bei den eingangs erwähnten Modellen der nicht vom Fahrer beeinflussbar ist). Beispielsweise beschreibt das Fahrverhalten, mit welcher Geschwindigkeit sich das Fahrzeug mit dem Fahrer auf bestimmten Straßenabschnitten bewegt oder mit welcher Geschwindigkeit das Fahrzeug mit dem Fahrer Kurven durchfährt. Das Fahrverhalten kann beispielsweise auch das Verhalten des Fahrers bei Überholmanövern umfassen oder ob der Fahrstil des Fahrers eher passiv oder aktiv ist.

Das Verfahren umfasst insbesondere ein Auswerten des Fahrverhaltens des einen Fahrers basierend auf dem Fahrverhalten der Vielzahl von weiteren Fahrern für mindestens eine spezifische Fahrsituation und ein Ansteuern von Funktionen im Fahrzeug basierend auf dem Auswerten.

Im Gegensatz zum Stand der Technik wird also bei dem Ansteuern der Funktionen auch ein Verhalten anderer Fahrer, z.B. deren Geschwindigkeit, berücksichtigt.

Dieses Verfahren berücksichtigt dabei bevorzugt aktuelle Fahrdaten für verschiedene Fahrsituationen. Dabei werden beispielsweise das Fahrverhalten eines Fahrers, wie z.B. die Geschwindigkeit des Fahrers berücksichtigt und/oder situationsspezifische Fahrdaten, wie z.B. Witterungsverhältnisse oder kurzfristig auftauchende Hindernisse.

Bestimmte Funktionen in einem von dem Fahrer gesteuerten Fahrzeug können durch die Auswertung eben dieser Fahrdaten, sowie mittels dem Einordnen des Fahrverhaltens eines Fahrers in das Spektrum von einer Vielzahl von Fahrern optimiert angesteuert werden. Beispielsweise können Funktionen, die von einem Fahrerassistenzsystem und/oder einer adaptiven Geschwindigkeitsregelung gesteuert werden, derart optimiert werden, dass diese entsprechend situationsabhängig und immer aktuell angesteuert werden können.

Gemäß einer Ausführungsform kann das Verfahren weiter ein Senden von ersten Informationen über das Fahrverhalten des einen Fahrers an eine externe Verarbeitungseinrichtung und/oder an mindestens ein weiteres Fahrzeug, umfassen.

Das Bereitstellen des Fahrverhaltens der Vielzahl von weiteren Fahrern kann weiter ein Empfangen von zweiten Informationen über das Fahrverhalten der Vielzahl von weiteren Fahrern von der externen Verarbeitungseinrichtung und/oder von mindestens einem Fahrzeug, das sich in der Nähe befindet, umfassen.

Die externe Verarbeitungseinrichtung kann beispielsweise eine externe Servereinrichtung sein, auf dem verschiedene computergestützte Anwendungen laufen können. Die externe Servereinrichtung kann mit einem Fahrzeugcomputer über gängige Hardware, wie beispielsweise über ein Navigationsgerät kommunizieren. Eine Kommunikation über eine drahtlose Internetverbindung oder über eine andere geeignete Kommunikationseinheit (z.B. mit einer OCU, "onboard communication unit") ist ebenfalls möglich. In diesem Fall kann die Kommunikation mit der externen Verarbeitungseinrichtung fortlaufend stattfinden.

Die externe Verarbeitungseinrichtung kann auch direkt über einen Adapter, beispielsweise eines seriellen Bussystems wie einem Controller Area Network (CAN) mit dem Fahrzeugcomputer verbunden werden, wenn sich das Fahrzeug in Ruhe befindet, z.B. beim Service. Dies kann insbesondere während einer Testphase für Prototypen verwendet werden. In diesem Fall findet die Kommunikation mit der externen Verarbeitungseinrichtung nur selten statt.

Entsprechende Hardware oder Software muss daher für diese Art von Kommunikation nicht zusätzlich implementiert werden.

Durch diese Kommunikation kann die externe Verarbeitungseinrichtung einer Vielzahl von Fahrzeugen Informationen über das Fahrverhalten vieler Fahrer fortlaufend aktualisiert zur Verfügung stellen.

Die Übermittlung der Informationen kann zudem in Echtzeit erfolgen, so dass Informationen über eine Fahrstrecke bereits zur Verfügung stehen können, bevor das Fahrzeug die entsprechende Fahrstrecke erreicht hat.

Gemäß einer Ausführungsform kann das Bestimmen des Fahrverhaltens eines Fahrers und/oder einer Vielzahl von Fahrern für Abschnitte einer Fahrstrecke erfolgen.

Mit dem erfindungsgemäßen Verfahren können damit selbsttätig Funktionen im Fahrzeug angesteuert werden, die gerade für diesen Abschnitt der Fahrstrecke relevant sind, wie beispielsweise eine Reduzierung der Geschwindigkeit beim Einfahren des Fahrzeugs in eine Kurve.

Basierend auf den Fahrdaten eines bereits durchfahrenen Abschnitts der Fahrstrecke, die von einem Fahrzeug ermittelt wurden, das diesen Abschnitt der Fahrstrecke bereits durchfahren hat, können Funktionen eines Fahrzeugs, das diesen Abschnitt der Fahrstrecke zu einem späteren Zeitpunkt durchfährt angesteuert werden.

Gemäß einer Ausführungsform können dritte Informationen, die die Fahrstrecke betreffen und die mit den ersten oder zweiten Informationen verknüpft sein können, bereitgestellt werden.

Die dritten Informationen können Informationen, die unabhängig vom Fahrverhalten des Fahrers sind, umfassen, z.B. Witterungsbedingungen bei dem Fahrverhalten der ersten und/oder zweiten Informationen und/oder eine Datumsangabe oder eine Zeitangabe umfassen, die angeben können, wann sich das Fahrzeug bei dem Fahrverhalten der ersten und/oder zweiten Informationen auf der Fahrzeugstrecke befindet und/oder befunden hat.

Das Ansteuern der Funktionen kann dann zusätzlich basierend auf den dritten Informationen erfolgen. Somit können neben dem Fahrverhalten weitere Kriterien einfließen.

Insbesondere kann basierend auf den dritten Informationen ein momentanes Fahrverhalten des Fahrers besser bewertet werden. Beispielsweise hängt das Fahrverhalten von äußeren Umständen wie Witterungsbedingungen oder auch der Tageszeit (insbesondere Tag- oder Nachtzeit) oder der Jahreszeit ab. Wenn beispielsweise das Fahrverhalten des Fahrers eine deutlich langsamere Geschwindigkeit aufweist als das Fahrverhalten der weiteren Fahrer, kann das daran liegen, dass der Fahrer einfach langsamer fährt als die meisten weiteren Fahrer. Es kann aber auch daran liegen, dass sich die Witterungsbedingungen geändert haben, beispielsweise jetzt Schnee liegt oder sich ansonsten die Verhältnisse auf einem gerade durchfahrenen Abschnitt geändert haben. Beispielsweise kann sich ein Hindernis wie eine Baustelle auf der Straße befinden, was ebenfalls die Geschwindigkeit beeinflussen kann.

Schließlich kann die Geschwindigkeit auch von anderen Fahrzeugen abhängen, beispielsweise, wenn sich das Fahrzeug des Fahrers hinter einem anderen Fahrzeug befindet, das sich mit einer verminderten Geschwindigkeit bewegt, oder wenn ein Stau ist. Diese Faktoren können zumindest teilweise mit Hilfe der dritten Informationen bei der Analyse berücksichtigt werden.

Die Geschwindigkeit kann beispielsweise dann eine andere sein, wenn das Fahrzeug denselben Abschnitt der Fahrstrecke durchfährt und sich jetzt ein Hindernis auf der Straße befindet, wie beispielsweise eine Baustelle.

Die dritten Informationen können dabei einer Vielzahl von Fahrzeugen durch die externe Verarbeitungseinrichtung zur Verfügung gestellt werden.

Gemäß einer Ausführungsform können das Fahrverhalten der Vielzahl von weiteren Fahrern und/oder die dritten Informationen innerhalb einer vorgegebenen Zeitspanne und/oder innerhalb eines vorgegebenen Zeitfensters ausgewertet werden.

Aus gesammelten Informationen können damit für vielbefahrene Abschnitte einer Fahrstrecke zeitnahe Informationen und auf wenig befahrenen Abschnitten der Fahrstrecke zeitlich kohärente Informationen verarbeitet werden.

Zeitnahe Informationen umfassen Informationen, die innerhalb einer bestimmten Zeitspanne vor dem Auswerten, beispielsweise eine halbe Stunde oder eine Stunde, ermittelt wurden, z.B. bevor sich das Fahrzeug des Fahrers auf einem jeweiligen Abschnitt der Fahrstrecke befindet.

Bei zeitlich kohärenten Fahrdaten werden Informationen von ähnlichen Zeitfenstern, z.B. ähnlichen Tagen, wie beispielsweise Wochentagen, Tageszeiten, Monate etc., ausgewertet.

Beispielsweise kann das Fahrverhalten des Fahrers, der einen Abschnitt der Fahrstrecke zu einer bestimmten Zeit durchfährt, mit dem Fahrverhalten weiterer Fahrer, die diesen Abschnitt der Fahrstrecke in einem gewählten Zeitfenster, das den Zeitpunkt mit einschließt, durchfahren haben, verglichen werden.

Es ist zudem möglich, zum Auswerten das Fahrverhalten der weiteren Fahrer zu einer bestimmten Zeit bei beispielsweise vergleichbaren Witterungsverhältnissen mit dem Fahrverhalten des Fahrers zu vergleichen.

Gemäß einer Ausführungsform kann das Auswerten weiter ein Vergleichen des Fahrverhaltens des Fahrers mit dem Fahrverhalten der Vielzahl von weiteren Fahrern bei einem erstmaligen Durchfahren eines Abschnitts der Fahrstrecke umfassen.

Das Verfahren kann außerdem weiter ein Erstellen eines fahrerspezifischen Profils, basierend auf dem Vergleich umfassen. Dieses kann abgespeichert und dann zur Ansteuerung von Fahrzeugfunktionen verwendet werden.

Damit wird ein automatisches Ansteuern von Funktionen in Echtzeit ermöglicht, wobei das fahrerspezifische Profil, das beim erstmaligen Durchfahren erstellt wurde, für jedes weitere Durchfahren genutzt werden kann, ohne dass zwingend ein neues Profil ermittelt werden muss. Fahrdaten können dabei in dem fahrerspezifischen Profil gespeichert sein.

Ein Vergleichen der Fahrverhalten kann zu einer optimierten Ansteuerung von Funktionen in dem Fahrzeug führen, da das Fahrverhalten nicht auf ein Fahrzeug beschränkt ist, sondern zudem auf den Fahrverhalten der Vielzahl weiterer Fahrer beruht.

Bei einer Ausführungsform umfasst das Ansteuern von Funktionen ein Parametrisieren eines Fahrerassistenzsystems. Eine derartige Parametrisierung eines Fahrerassistenzsystems, basierend auf dem Auswerten, z.B. Vergleichen, kann zu einem sicherem und komfortablerem Fahren sowie gesteigerten Vertrauen des Fahrers in das Fahrzeug führen.

Bei der Parametrisierung des Fahrerassistenzsystems werden Parameter wie die Geschwindigkeit des Fahrzeugs oder der Abstand des Fahrzeugs zu einem anderen Fahrzeug zu einem Hindernis oder zu einem bestimmten Abschnitt einer Fahrstrecke angepasst. Das Fahrerassistenzsystem kann dann mit diesen Parametern eingestellt werden.

Diese Einstellung erfolgt bevorzugt nicht mehr durch einen Fahrer des Fahrzeugs selbst, sondern wird selbsttätig gesteuert, was einen hohen Komfort für den Fahrer darstellt.

Gemäß einer Ausführungsform kann das Verfahren weiter ein Erfassen, inwiefern sich das fahrerspezifische Profil bei jedem weiteren Durchfahren des Abschnitts der Fahrstrecke ändert, umfassen.

Die Funktionen können bei jedem weiteren, erneuten Durchfahren des Abschnitts der Fahrstrecke in Abhängigkeit von dem Erfassen, inwiefern sich das fahrerspezifische Profil ändert, angesteuert werden.

Gemäß einer Ausführungsform kann das Verfahren weiter ein Abschätzen umfassen, inwiefern sich das fahrerspezifische Profil für einen weiteren, noch nicht durchfahrenen Abschnitt der Fahrstrecke ändert, in Abhängigkeit von einem statistischen Modell.

Unter Verwendung des statistischen Modells kann beispielsweise über eine lineare Regression eine durchschnittliche Geschwindigkeit für einen noch nicht durchfahrenen Abschnitt der Fahrstrecke basierend auf einer durchschnittlichen Geschwindigkeit für einen bereits durchfahrenen Abschnitt der Fahrstrecke, berechnet werden. Auf Basis dieses Abschätzens können beispielsweise Parameter beispielsweise für das Fahrerassistenzsystem angepasst werden und die Ansteuerung von Funktionen des Fahrerassistenzsystems optimiert werden.

Gemäß einer Ausführungsform kann das statistische Modell auf dem fahrerspezifischen Profil eines bereits durchfahrenen Abschnitts der Fahrstrecke beruhen.

Aus den Daten des fahrerspezifischen Profils können damit paarweise für bereits durchfahrene und noch zu durchfahrene Abschnitte einer Fahrstrecke zeitnahe und/oder zeitlich kohärente Fahrdaten verglichen und statistische Modelle gelernt werden. Aus den Daten (insbesondere Fahrverhalten) auf dem durchfahrenen Abschnitt der Fahrstrecke kann damit insbesondere auf ein Fahrverhalten eines noch zu durchfahrenen Abschnitts der Fahrstrecke geschlossen werden.

Gemäß einer Ausführungsform umfasst eine Vorrichtung zum Steuern von Funktionen in einem Fahrzeug eine Steuerungseinrichtung umfassen, mit der ein Fahrverhalten eines Fahrers bestimmbar ist.

Die Steuerungseinrichtung wertet dann das Fahrverhalten des einen Fahrers basierend auf dem Fahrverhalten einer Vielzahl von weiteren Fahrern für mindestens eine spezifische Fahrsituation aus.

Die Steuerungseinrichtung steuert ferner Funktionen im Fahrzeug basierend auf dem Auswerten an.

Die Vorteile der erfindungsgemäßen Vorrichtung entsprechen im Wesentlichen den oben stehenden Vorteilen des erfindungsgemäßen Verfahrens zum Steuern von Funktionen in einem Fahrzeug. Die Vorrichtung kann zur Implementierung eines der oben beschriebenen Verfahren dienen.

Gemäß einer Ausführungsform kann die Steuerungseinrichtung ein Fahrerassistenzsystem und/oder eine adaptive Geschwindigkeitsregelung umfassen.

Eine adaptive Geschwindigkeitsregelung, ACC, kann zum Beispiel normalerweise nur eine konstante Geschwindigkeit einstellen. Mittels der erfindungsgemäßen Vorrichtung kann der ACC die Geschwindigkeit für bestimmte Abschnitte einer Fahrstrecke kontinuierlich anpassen und die Geschwindigkeit im Sinne des Fahrers und der momentanen Fahrsituation regeln. Selbiges gilt für die Ansteuerung von Funktionen eines Fahrerassistenzsystems.

Gemäß einer Ausführungsform kann die Steuerungseinrichtung erste Informationen über das Fahrverhalten des einen Fahrers an eine externe Verarbeitungseinrichtung senden.

Die Steuerungseinrichtung kann auch zweite Informationen über das Fahrverhalten einer Vielzahl von weiteren Fahrern von der externen Verarbeitungseinrichtung empfangen.

Die Steuerungseinrichtung weist dieselben Vorteile auf, wie das Verfahren, das mittels dieser Steuereinrichtung durchgeführt werden kann und die vorab bereits diskutiert wurden.

Zudem wird eine Verarbeitungseinrichtung mit einem insbesondere drahtlosen Empfänger zum Sammeln und Empfangen von ersten Informationen über das Fahrverhalten eines Fahrers von einem Fahrzeug und/oder einer Vielzahl von Fahrzeugen bereitgestellt.

Die Verarbeitungseinrichtung weist weiter einen insbesondere drahtlosen Sender zum Senden von zweiten Informationen über das Fahrverhalten einer Vielzahl von Fahrern an ein Fahrzeug und/oder eine Vielzahl von Fahrzeugen auf. Diese Verarbeitungseinrichtung kann als externe Verarbeitungseinrichtung wie oben beschrieben dienen.

Gemäß einer Ausführungsform kann die externe Verarbeitungseinrichtung ein einzelner externer Server sein, der mittels eines Adapters an der Steuerungseinrichtung angeschlossen werden kann oder drahtlos mit der Steuerungseinrichtung kommunizieren kann.

Über einen Adapter, beispielsweise einen CAN (Controller Area Network)-Adapter, der an der Steuerungseinrichtung, die beispielsweise ein Fahrzeugcomputer sein kann, installiert sein kann, können fahrerspezifische und streckenspezifische Informationen von dem externen Server ausgelesen werden.

Mittels eines seriellen Bussystems kann damit der Fahrzeugcomputer an den externen Server angeschlossen werden.

Der Anschluss sowie die Übermittlung der Informationen erfolgen mittels gängiger Hardware und basieren auf bereits bestehenden Kommunikationsverfahren. Zur Umsetzung der erfindungsgemäßen Vorrichtung werden daher keine zusätzlichen Komponenten oder Verfahren benötigt.

Die Verarbeitungseinrichtung kann auch ein Rechnernetz sein, das drahtlos mit der Steuerungseinrichtung kommunizieren kann.

Benötigte Anwendungen zum Erstellen und Verarbeiten der Informationen sind bei der Nutzung des einzelnen externen Servers die gleichen wie bei der Nutzung des Rechnernetzes, sodass die Anwendungen von einem Server einfach auf eine Vielzahl von Rechner bzw. Server übertragen werden können.

Die externe Verarbeitungseinrichtung kann ein gewöhnliches zentrales Rechnernetz mit Back-End und Online-Anbindung sein und fortlaufend mit einer ganzen Fahrzeugflotte kommunizieren.

Ein erfindungsgemäßes System umfasst eine Steuerungseinrichtung wie oben beschrieben und eine Verarbeitungseinrichtung wie oben beschrieben.

Eine Berechnung von Parametern zur Ansteuerung der Funktionen kann bei dem System in der Steuerungseinrichtung, die in dem Fahrzeug selbst integriert ist, oder auch in der Verarbeitungseinrichtung stattfinden.

Die Anpassung von Funktionen, basierend auf dem obigen System, bietet Vorteile in Punkto Komfort und Akzeptanz. Eine Anpassung erfolgt mithilfe von Informationen über zeitnah vorausfahrende Fahrzeuge sowie über die Relation des eigenen Fahrverhaltens zu dem Fahrverhalten anderer Fahrer.

Das System kann mit Hilfe aller Fahrzeuge, die beispielsweise über ein Fahrerassistenzsystem oder ein ACC und über ein Navigationssystem verfügen, implementiert werden.

Die vorliegende Erfindung wird nachfolgend unter Bezugnahme auf die beigefügten Zeichnungen im Detail beschrieben.
FIG. 1 zeigt ein Verfahren gemäß einer Ausführungsform der vorliegenden Erfindung.
FIG. 2 zeigt ein Verfahren gemäß einer weiteren Ausführungsform der vorliegenden Erfindung.
FIG. 3 zeigt eine schematische Darstellung einer Ausführungsform der vorliegenden Erfindung.
FIG. 4 zeigt eine schematische Darstellung von zwei Fahrzeugen, die sich auf einer Fahrstrecke bewegen gemäß einer Ausführungsform der vorliegenden Erfindung.
FIG. 5 zeigt ein Histogramm gemäß einer Ausführungsform der vorliegenden Erfindung.
FIG. 6 zeigt eine schematische Darstellung eines Fahrzeugs auf einer Fahrstrecke gemäß einer weiteren Ausführungsform der vorliegenden Erfindung.
FIG. 7 zeigt verschiedene Kurvenverläufe einer Fahrstrecke gemäß einer Ausführungsform der vorliegenden Erfindung.
FIG. 8 zeigt ein weiteres Histogramm und ein Diagramm gemäß einer Ausführungsform der vorliegenden Erfindung.
FIG. 9 zeigt ein Fahrzeug gemäß einer Ausführungsform der vorliegenden Erfindung.

Nachfolgend werden Ausführungsformen der vorliegenden Erfindung unter Bezugnahme auf die beigefügten Zeichnungen detailliert erläutert. Diese Ausführungsformen stellen nur Beispiele dar und sind nicht als einschränkend auszulegen. Während beispielsweise die Ausführungsformen derart beschrieben werden, dass sie eine Vielzahl von Merkmalen und Elementen umfassen, so können einige dieser Merkmale in anderen Ausführungsformen weggelassen und/oder durch alternative Merkmale oder Elemente ersetzt werden. In anderen Ausführungsformen können zusätzliche oder alternativ zusätzliche Merkmale oder Elemente neben den explizit beschriebenen bereitgestellt werden. Es können Varianten oder Modifikationen, die sich auf ein oder mehrere Ausführungsformen beziehen, auch auf andere Ausführungsbeispiele angewandt werden, sofern nichts anderes angegeben ist.

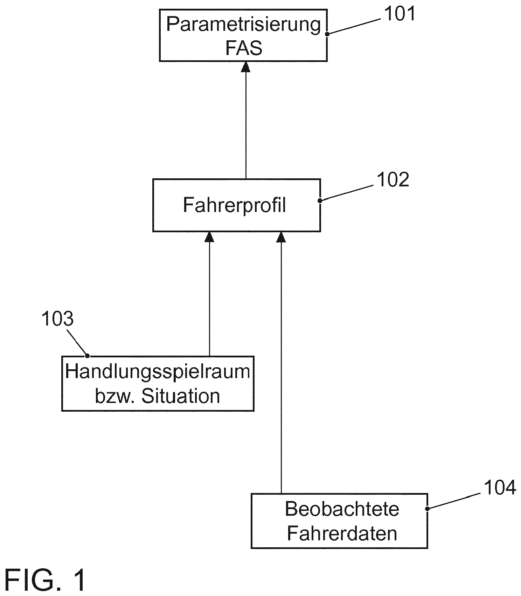

FIG. 1 zeigt ein Verfahren für ein Fahrzeug gemäß einer Ausführungsform der vorliegenden Erfindung, bei dem bei 101 ein Fahrerassistenzsystem (FAS) entsprechend einem Sicherheits- und Komfortempfinden eines Fahrers des Fahrzeugs parametrisiert wird.

Fahrerassistenzsysteme sind, wie eingangs bereits erwähnt, elektronische Zusatzeinrichtungen in Fahrzeugen zur Unterstützung des Fahrers in bestimmten Fahrsituationen. Dieses System greift teils selbsttätig oder selbstregelnd in Antrieb, Steuerung (z. B. Gas, Bremse) oder Signalisierungseinrichtungen des Fahrzeuges ein. Mittels geeigneter Schnittstellen, z.B. Anzeigen und/oder akustische Signalgebern kann der Fahrer durch das Fahrerassistenzsystem kurz vor oder während kritischer Fahrsituationen gewarnt werden.

Parametrisierung bedeutet hier insbesondere, dass Parameter, die die Funktionen des Fahrerassistenzsystems beeinflussen oder bestimmen, eingestellt werden. Beispielsweise können Geschwindigkeit des Fahrzeugs und der Abstand des Fahrzeugs zu einem vorausfahrenden Fahrzeug, zu einem Hindernis auf einem Abschnitt der Fahrstrecke oder zu einem bestimmten Abschnitt einer Fahrstrecke variieren, und auf Basis derartiger Größen kann das Fahrerassistenzsystem parametrisiert, d.h. eingestellt, werden.

Dabei wird bei dem Verfahren der Fig. 1 ein Fahrerprofil 102 benötigt, dessen Informationen eingesetzt werden, um die Parametrisierung des Fahrerassistenzsystems bei 101 durchzuführen.

Das Fahrerprofil 102 umfasst beispielsweise die durchschnittliche Geschwindigkeit des Fahrzeugs und einen durchschnittlichen Abstand zu einem vorausfahrenden Fahrzeug, was also einem durchschnittlichen Fahrverhalten des Fahrers entspricht. Das Fahrerprofil 102 kann auch weitere Informationen über das Fahrverhalten des Fahrers umfassen. Um das Fahrerprofil 102 aus dem Fahrverhalten eines Fahrers bestimmen zu können, wird dieses bei dem Ausführungsbeispiel der Fig. 1 in einen Kontext zu einer Fahrsituation 103 gesetzt. Aus der Fahrsituation kann sich dann ein gewisser Handlungsspielraum für den Fahrer und/oder für eine automatische Fahrregelung ergeben.

Beispielsweise reicht die Kenntnis über die durchschnittliche Geschwindigkeit gegebenenfalls nicht aus, um Funktionen eines Fahrerassistenzsystems anzupassen, da sich diese kontinuierlich basierend auf dem Fahrverhalten des Fahrers und/oder abhängig von der jeweils spezifischen Fahrsituation ändern kann. Die Geschwindigkeit muss beispielsweise unter Umständen reduziert werden wenn die Fahrbahn nass ist.

Eine derartige spezifische Fahrsituation liegt zum Beispiel vor, wenn ein Fahrzeug einen Straßenabschnitt mit einer bestimmten Geschwindigkeit durchfährt und die Straße beispielsweise eine bestimmte Steigung hat oder eine bestimmte Kurvenlage aufweist.

Je mehr Informationen zu der jeweiligen spezifischen Fahrsituation vorliegen, desto genauer kann die Einschätzung des Fahrers anhand der gemessenen Daten erfolgen. Zu einer Einschätzung des Fahrers werden dabei beobachtbare Fahrdaten 104 ausgewertet.

Beispielsweise können derartige beobachtbare Fahrdaten 104 Informationen über die Beschaffenheit der Straße, wie zum Beispiel die Straßenglätte und die Feuchtigkeit der Straße, die mittels Fahrzeugsensoren ermittelt wurden, umfassen und Auskunft darüber geben, in welcher Fahrsituation sich ein Fahrzeug befindet, wenn es einen bestimmten Abschnitt einer Fahrstrecke durchfährt. Informationen über die Kurvenlage des bestimmten Abschnitts der Fahrstrecke stellen ebenfalls Beispiele für beobachtbare Fahrdaten dar.

Darüber hinaus umfassen die beobachtbaren Fahrdaten zum Beispiel Informationen darüber, ob das Fahrzeug hinter einem weiteren Fahrzeug fährt. Dadurch kann die Geschwindigkeit des Fahrzeugs eine andere, also beispielsweise geringer, sein, als wenn sich das Fahrzeug nicht hinter einem weiteren Fahrzeug befindet und einen jeweiligen Abschnitt der Fahrstrecke durchfährt.

Zudem umfassen die beobachtbaren Fahrdaten ein Fahrverhalten weiterer Fahrer von weiteren Fahrzeugen, die z.B. über einen Server oder eine ähnliche Einrichtung bereitgestellt können. Das Fahrverhalten des Fahrers, wie es beispielsweise in dem Fahrerprofil 102 vorliegt, kann dann zur Auswertung in den Kontext des Fahrverhaltens weiterer Fahrer gesetzt werden. Dies wird im Folgenden näher erläutert. Somit kann das Verfahren der FIG. 1 allgemein zum Steuern von Funktionen in einem Fahrzeug und insbesondere zum Steuern eines Fahrerassistenzsystems bei 102 und/oder einer adaptiven Geschwindigkeitsregelung verwendet werden. Das Verfahren der FIG. 1 kann beispielsweise mittels einer im Fahrzeug installierten Steuerungseinrichtung ausgeführt werden.

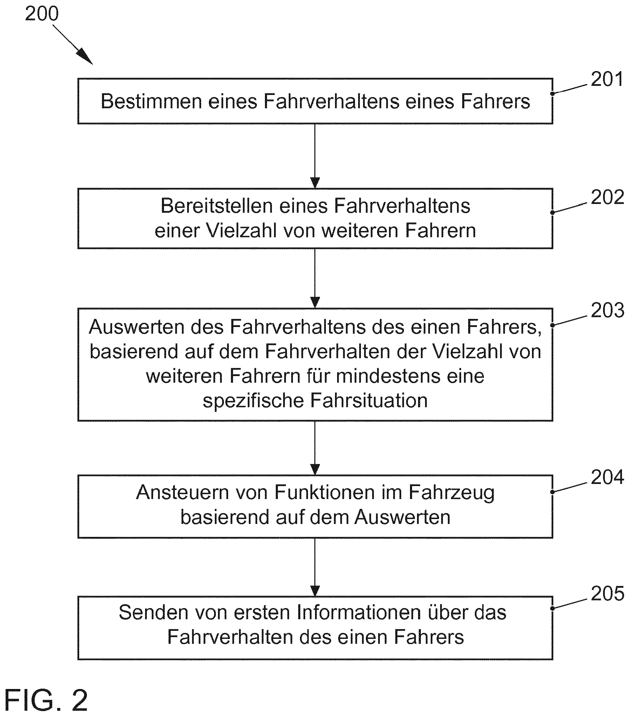

Die Verwendung des Fahrverhaltens des Fahrers, z.B. in dem Fahrerprofil 102, sowie des Verhaltens weiterer Fahrer wird nunmehr unter Bezugnahme auf FIG. 2 näher erläutert.

FIG. 2 zeigt Verfahrensschritte 201 bis 205 eines Verfahrens 200, welches beispielsweise von einer Steuereinrichtung eines Fahrzeugs, z.B. einer Electronic Control Unit, ECU ausgeführt werden kann, aber nicht darauf beschränkt ist.

Zur Erfassung von Daten, die bei der Ausführungsform der FIG. 2 für die Ansteuerung eines Fahrerassistenzsystems oder anderer Fahrzeugfunktionen benötigt werden, werden fahrerspezifische und streckenspezifische Informationen zunächst gesammelt und anschließend ausgewertet.

Im Schritt 201 des Verfahrens 200 der FIG. 2 findet dabei ein Bestimmen eines Fahrverhaltens eines Fahrers statt.

Das Fahrverhalten des Fahrers umfasst dabei fahrerspezifische Informationen, beispielsweise Informationen darüber, mit welcher Geschwindigkeit ein Fahrer auf einer Fahrstrecke fährt oder welchen Abstand das Fahrzeug zu einem anderen Fahrzeug oder zu einem Hindernis auf der Fahrstrecke hat.

Die Geschwindigkeit kann mittels im Fahrzeug installierter Geschwindigkeitssensoren erfasst werden, der Abstand über Abstandssensoren. Ein Fahrzeugcomputer liest mittels geeigneter Schnittstellen die Werte der Geschwindigkeitssensoren und/oder der Abstandssensoren aus und speichert selbige ab.

In einem Schritt 202 des Verfahrens 200 der FIG. 2 wird dann das Fahrverhalten einer Vielzahl von weiteren Fahrern bereitgestellt, z.B. von einer externen Einrichtung bereitgestellt.

Zum Sammeln derartiger Daten über das Fahrverhalten einer Vielzahl weiterer Fahrer werden z.B. in jedem einzelnen Fahrzeug, einer Vielzahl von Fahrzeugen, z.B. einer Fahrzeugflotte, die Werte für die Geschwindigkeit und den Abstand, wie oben beschrieben, ermittelt und gespeichert. Über eine am Fahrzeugcomputer angebrachte Schnittstelle, beispielsweise über einen CAN-Adapter, kann der Fahrzeugcomputer an einen anderen, externen Computer bzw. Server angeschlossen werden und diese Werte an den externen Computer übertragen, z.B. bei einem Service in einer Werkstatt. Geschieht dies bei einer Vielzahl von Fahrzeugen, können viele Datensätze gesammelt werden und auf dem externen Computer gespeichert werden.

Im Gegenzug können die Vielzahl von Datensätzen von dem externen Computer mittels obiger Herangehensweise auf einen Fahrzeugcomputer übertragen werden, so dass die Werte für die Geschwindigkeit und/oder Abstände von vielen Fahrzeugen, d.h. das Fahrverhalten vieler Fahrer, einem Fahrzeug zur Verfügung gestellt werden können. Der externe Computer arbeitet hier als Server.

Bei anderen Ausführungsformen können die Datensätze auch drahtlos zu dem externen Computer oder einer anderen Verarbeitungseinrichtung übermittelt werden, beispielsweise mittels einer in dem Fahrzeug eingebauten Kommunikationseinheit. Dies kann z.B. über ein Mobilfunknetz auch kontinuierlich erfolgen, z.B. mittels einer geeigneten Applikation ("App").

Die Datensätze können alternativ auch auf ein ganzes Rechnernetz übertragen werden.

Die Übermittlung der Datensätze von dem Fahrzeugcomputer kann dann beispielsweise über eine Online Connectivity Unit (OCU, auch als onboard communication unit bezeichnet, also eine im Fahrzeug eingebaute Kommunikationseinheit) erfolgen, die drahtlos mit einem externen Computer oder einem Rechnernetz kommuniziert.

Die Übermittlung von fahrerspezifischen Datensätzen an ein Rechnernetz kann anonym erfolgen. Damit eine derartige Kommunikation zwischen dem Rechnernetz und einem einzelnen Fahrzeug erfolgen kann, kann ein entsprechender Sicherheitsschlüssel zwischen dem Fahrzeugcomputer und dem Rechnernetz ausgetauscht werden. Andere Fahrzeuge haben dann keinen Zugriff auf die entsprechenden Daten.

Um Informationen über das Fahrverhalten der Vielzahl von Fahrern bereitzustellen, werden also entsprechende Informationen (im Folgenden als zweite Informationen bezeichnet) von einer externen Verarbeitungseinrichtung empfangen. Diese externe Verarbeitungseinrichtung kann beispielsweise der oben beschriebene externe Computer oder ein ganzes Rechnernetz sein.

Im Schritt 203 des Verfahrens 200 der FIG. 2 erfolgt anschließend ein Auswerten des Fahrverhaltens des einen Fahrers, basierend auf dem Fahrverhalten der Vielzahl von weiteren Fahrern für mindestens eine spezifische Fahrsituation.

Die Datensätze können auf dem externen Computer aufbereitet werden, beispielsweise über Anwendungen, die auf dem externen Computer laufen. Diese Anwendungen können zum Beispiel "Open Source" Anwendungen sein. Beispielsweise können Durchschnittswerte aus vielen Datensätzen gebildet werden, die dann einzelnen Fahrzeugen bereitgestellt werden.

Die Verwaltung der Datensätze kann beispielsweise mittels einer Datenbank erfolgen, z.B. über "HBase" was eine gängige, skalierbare und einfache Datenbank zur Verwaltung sehr großer Datenmengen ist. Diese Datenbank kann sich auf dem externen Computer befinden.

Dabei wird beispielsweise ausgewertet wie sich ein Fahrer bei einer spezifischen Fahrsituation verhalten halt und damit verglichen, wie sich andere Fahrer bei derselben Fahrsituation verhalten haben. Beispielsweise kann ausgewertet werden, wie schnell ein Fahrer einen bestimmten Streckenabschnitt einer Straße, zum Beispiel eine Kurve, passiert hat.

Anschließend wird diese Geschwindigkeit mit anderen Geschwindigkeiten verglichen, die von anderen Fahrzeugen bereitgestellt werden, die diese Kurve zuvor passiert haben.

Basierend auf dem Vergleich und dem Auswerten der entsprechenden Informationen erfolgt im Schritt 204 des Verfahrens 200 der FIG. 2 ein Ansteuern von Funktionen im Fahrzeug. Diese Funktionen können beispielsweise das oben bereits diskutierte Fahrerassistenzsystem sein.

Wenn beispielsweise für die bereits erwähnte Kurve eine bestimmte Geschwindigkeit für einen Fahrer eines Fahrzeugs ermittelt und mit anderen Geschwindigkeiten anderer Fahrer verglichen wurde, kann das Fahrerassistenzsystem derart optimiert werden, dass zum Beispiel beim erneuten Passieren der Kurve das Fahrzeug eine verbesserte Kurvenlage hat bzw. dass das Fahrzeug auf der Straße gehalten wird ohne evtl. auszubrechen. Zudem kann die Fahrsituation berücksichtigt werden, wie beispielsweise die Nässe der Straße, kann das Fahrerassistenzsystem zusätzlich davon abhängig angesteuert werden.

In einem Schritt 205 des Verfahrens 200 der FIG. 2 werden - wie bereits oben kurz erwähnt - erste Informationen über das in Schritt 201 bestimmte Fahrverhalten des einen Fahrers an eine externe Verarbeitungseinrichtung und/oder an mindestens ein Fahrzeug, das sich in der Nähe befindet gesendet. Dies ermöglicht z.B. ein Sammeln von Daten über eine Vielzahl von Fahrern, die dann wiederum bei einem erneuten Durchlauf des Verfahrens 200 - z.B. in einem anderen Fahrzeug - in dem Schritt 202 bereitgestellt werden können.

Es ist auch möglich, dass über Drittanbieter beispielweise über ein Navigationsgerät oder dergleichen Informationen für bestimmte Streckenabschnitte zur Verfügung gestellt und ausgetauscht werden. Die ersten Informationen des einen Fahrzeugs können dabei zum Beispiel über ein im Fahrzeug installiertes Navigationsgerät an die externe Verarbeitungseinrichtung gesendet werden. Ein Navigationsgerät eines anderen Fahrzeugs kann dann die entsprechenden Informationen als zweite Informationen von der externen Verarbeitungseinrichtung empfangen und beispielsweise einer im Fahrzeug installierten Steuerungseinrichtung zuführen, die diese dann zur weiteren Verwendung in dem oben beschriebenen Verfahren verarbeitet.

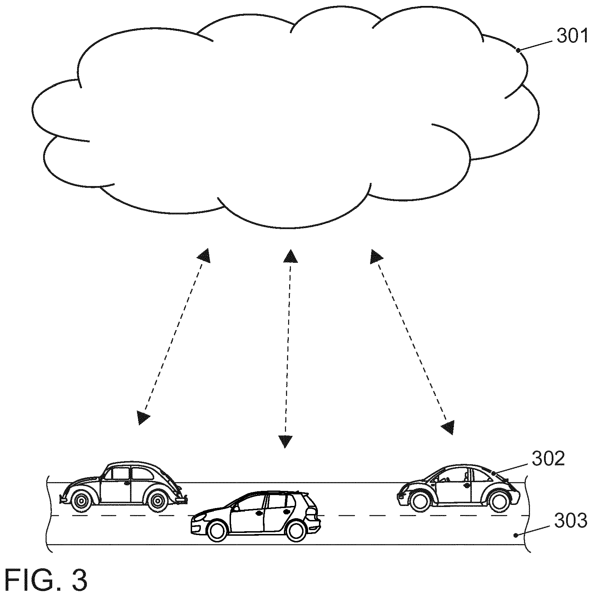

Die Kommunikation der verschiedenen Fahrzeuge mit einer externen Verarbeitungseinrichtung wie oben beschrieben kann beispielsweise mittels der oben erwähnten Online Connectivity Unit (OCU) erfolgen, was schematisch in FIG. 3 dargestellt ist.

In FIG. 3 werden verschiedene Fahrzeuge 302 gezeigt, die sich auf einer Fahrstrecke 303 bewegen und kontinuierlich Daten an ein Rechnernetz 301 senden oder von dem Rechnernetz 301 Daten empfangen, wobei das Senden und Empfangen mittels gestrichelter Pfeile in FIG. 3 dargestellt ist. Das Rechnernetz 301 kann hier als Beispiel für die externe Verarbeitungseinrichtung gesehen werden.

Das Rechnernetz ist allgemein ein Zusammenschluss verschiedener technischer, primär selbstständiger elektronischer Systeme, z.B. Computer oder allgemein Server, der die Kommunikation der einzelnen Systeme untereinander ermöglicht.

Die Daten umfassen z.B. die oben beschriebenen ersten Informationen über das Fahrverhalten eines Fahrers eines einzelnen Fahrzeugs 302, die an das Rechnernetz 301 gesendet werden und in dem dargestellten Beispiel die zweiten Informationen über das Fahrverhalten der Vielzahl von Fahrern, die von dem Fahrzeug 302 von dem Rechnernetz 301 empfangen werden.

In der externen Verarbeitungseinrichtung, z.B. dem Rechnernetz 301, können die von einer Vielzahl von Fahrzeugen empfangenen ersten Informationen aufbereitet und analysiert werden, z.B. um sie in aufbereiteter Form als zweite Informationen zur Verfügung zu stellen. Dies kann über entsprechende Anwendungen geschehen.

Beispielsweise kann die Geschwindigkeit einer Vielzahl von Fahrern und deren Verteilung für einen bestimmten Streckenabschnitt ausgewertet werden. So kann z.B. ermittelt werden, dass 90% der Fahrer mit einer Geschwindigkeit zwischen 60 und 70 km/h durch eine bestimmte Kurve k fahren.

Das z.B. in Schritt 201 der FIG. 2 bestimmte Fahrverhalten eines bestimmten Fahrers kann dann in Bezug zu dem Fahrverhalten der Vielzahl von Fahrern gesetzt werden.

Beispielsweise kann so festgestellt werden, dass der eine Fahrer schneller durch die Kurve k fährt als 70% aller Fahrer.

Diese Information kann, wie oben bereits erwähnt, ein Fahrerassistenzsystem optimieren bzw. parametrisieren. Zum Beispiel kann auf Basis der Bestimmung des Fahrverhaltens des einen Fahrers über mehrere Kurven für darauffolgende Kurven eine Geschwindigkeit, eine adaptive Geschwindigkeitsregelung (Adaptive Cruise Control, ACC) eines Abstandsregeltempomaten auf einen Wert eingestellt werden, der dem Fahrverhalten des Fahrer entspricht. In dem obigen Zahlenbeispiel kann die Geschwindigkeit beispielsweise derart eingestellt werden, dass auch hier eine Geschwindigkeit schneller als ca. 70% der Vielzahl weiterer Fahrer für diese darauffolgende Kurve vorliegt.

Ein Abstandsregeltempomat ist dabei eine Geschwindigkeitsregelanlage, die in einem Fahrzeug verbaut ist und die eine bevorzugte Geschwindigkeit einstellt, aber dabei eine Regelung des Abstands zu einem vorausfahrenden Fahrzeug als zusätzlich Rückführ- und Stellgröße einbezieht.

Als Varianten der oben beschriebenen Kommunikation über eine externe Verarbeitungseinrichtung kann das Senden und das Empfangen der ersten und zweiten Informationen direkt zwischen verschiedenen Fahrzeugen erfolgen, ohne dass die ersten Informationen und/oder die zweiten Informationen an die externe Verarbeitungseinrichtung gesendet werden.

Dies kann beispielsweise über eine sog. "Car2Car Communication" erfolgen, bei der vernetzte Fahrzeuge beim Fahren lokal Informationen über Fahrdaten einzelner Streckenabschnitte austauschen.

Zusätzliche Informationen über Abschnitte einer Fahrtstrecke können auch von einer sog. "intelligenten Strecke" bereitgestellt werden. Eine "intelligente Strecke" erfasst permanent Fahrdaten und stellt diese den Fahrzeugen oder dem zentralen Rechnernetz, wie der oben beschriebenen externen Verarbeitungseinrichtung zur Verfügung.

Auf einer intelligenten Strecke sind beispielsweise Sensoren im Boden einer Fahrzeugstrecke installiert, die die Feuchtigkeit der Straße ermitteln. Mittels am Sensor angebrachter Sender können Werte für die Feuchtigkeit an einen im Fahrzeug angebrachten Empfänger übermittelt werden.

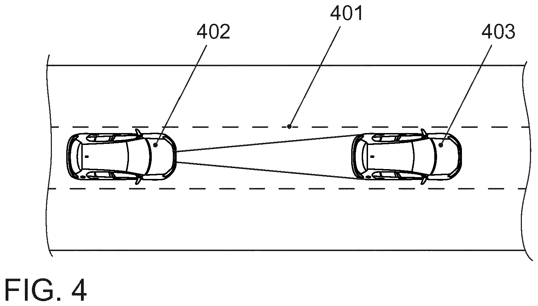

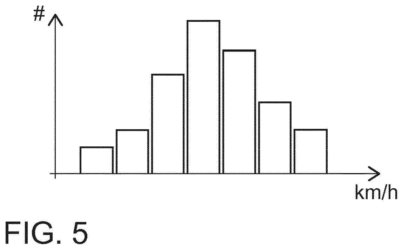

Diese zusätzlichen Informationen können ebenfalls bei der Einstellung von Fahrzeugfunktionen verwendet werden. Nunmehr werden noch konkretere Beispiele für spezielle Fahrsituationen für die oben erläuterten Verfahren und Vorrichtungen gegeben. Bei einem Beispiel, welches unter Bezugnahme auf FIG. 4 und FIG. 5 erläutert werden wird, werden aus gesammelten Fahrdaten, also den ersten und zweiten Informationen für vielbefahrene Streckenabschnitte zeitnahe Daten verarbeitet. Beispielsweise fährt ein erster Fahrer in einem Fahrzeug, zum Beispiel in einem in FIG. 4 gezeigten Fahrzeug 402, mit einer Geschwindigkeit zu einer bestimmten Zeit, z.B. um 15:10 Uhr, über einen Abschnitt A1 einer Fahrstrecke 401. Um sein Fahrverhalten einzuordnen, werden zum Vergleich Fahrdaten einer Vielzahl weiterer Fahrer in einem Zeitraum von 15:00 Uhr - 15:20 Uhr am gleichen Tag, also zeitnah zu der Fahrt des Fahrers, ausgewertet. Das in FIG. 5 dargestellte Histogramm zeigt eine Verteilung der Geschwindigkeit des Fahrzeugs für den ersten Abschnitt.

Auf wenig befahrenen Abschnitten der Fahrstrecke 401, d.h. wenn nicht genug zeitnahe Daten weiterer Fahrer vorliegen, können zeitlich kohärente Daten verwendet werden. Beispielsweise fährt ein zweiter Fahrer in einem Fahrzeug, zum Beispiel in dem in FIG. 4 gezeigten Fahrzeug 403, mit einer Geschwindigkeit an einer Wertung um 13:55 Uhr über einen Abschnitt A2 der Fahrstrecke 401. Hier werden nunmehr Fahrdaten von anderen Fahrern von anderen Werktagen um diese Zeit bei beispielsweise vergleichbaren Witterungsverhältnissen ausgewertet.

Bei einer Folgefahrt, beispielsweise wenn sich das erste Fahrzeug 402 wie in FIG.4 gezeigt hinter dem zweiten Fahrzeug 403 befindet, ist der Handlungsspielraum des Fahrers des ersten Fahrzeugs 402 eingeschränkt und kann bei Ausführungsformen entsprechend gesondert behandelt werden. Die bei einer derartigen Fahrt erfassten Fahrdaten des Fahrers können die Auswertung verfälschen, da hier dem Fahrer sein Fahrverhalten durch das vorausfahrende Fahrzeug aufgezwungen wird und daher nicht einem bevorzugten Fahrverhalten entspricht. Um dies zu berücksichtigen, kann beispielsweise die Geschwindigkeit einer derartigen Situation bei dem Verfahren der FIG. 2 unberücksichtigt bleiben.

Bei einer Anpassung eines Fahrerassistenzsystems wie der oben erwähnten Geschwindigkeitsregelung, das heißt wenn sich das Fahrzeug bereits in einer bestimmten Fahrsituation, z.B. in der oben beschriebenen Folgefahrt befindet, wird dann beispielsweise eine mit dem erfindungsgemäßen Verfahren berechnete Geschwindigkeit als oberer Schwellenwert verwendet. Die Geschwindigkeit des Fahrzeugs 402 wird dann z.B. von der Geschwindigkeit des Fahrzeugs 403 bestimmt, solange das Fahrzeug 403 langsamer als die berechnete Geschwindigkeit fährt. Wenn das Fahrzeug 403 schneller fährt, wird die Geschwindigkeit des Fahrzeugs 402 dann z.B. auf die berechnete Geschwindigkeit geregelt.

Nach dem Durchfahren eines Abschnitts einer Fahrstrecke werden Fahrdaten des Fahrers mit den Fahrdaten anderer Fahrer (zeitlich oder zeitlich kohärent wie oben erläutert) verglichen. Entsprechende Parameter einer Fahrerprofils, wie beispielsweise die Geschwindigkeit können dann angepasst werden. Das Fahrerprofil kann beispielweise Informationen über das Fahrverhalten, wie oben bereits diskutiert, umfassen.

Das Fahrerprofil kann den Rang des Fahrerdatums (d.h. der Daten für den jeweiligen Fahrer) im Histogramm der Vergleichsdaten der Vielzahl weiterer Fahrer als Prozent-Angabe umfassen. Zum Beispiel kann im Fahrerprofil hinterlegt sein, wie eine Geschwindigkeit des Fahrers im Vergleich zu anderen Fahrern einzuordnen ist, z.B. schneller als 45% der Vielzahl weiterer Fahrer, schneller als 70% der Vielzahl weiterer Fahrer oder dergleichen.

Das Fahrerprofil kann zum Beispiel durch Führung eines Parameters wie den obigen %-Werten angepasst werden, d.h. der Parameter wird laufend auf Basis neuer bestimmter Daten angepasst. Dies kann beispielsweise über das sog. "Exponential Moving Average-Prinzip", also über einen gleitenden Mittelwert, auch als gleitender Durchschnitt bezeichnet, erfolgen. Dieses Prinzip dient allgemein zur Glättung von Zeit- bzw. Datenreihen.

Alternativ oder zusätzlich kann das Fahrerprofil das Verhältnis Fahrerdatum zu Parametern, wie zum Beispiel einem Mittelwert oder einer Standardabweichung der Verteilung der Daten anderer Fahrer umfassen.

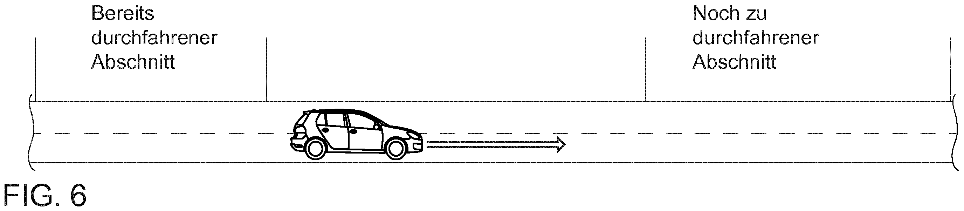

Im Folgenden wird unter Bezugnahme auf FIG. 6 noch erläutert, wie Fahrdaten einer bereits durchfahrenen Fahrstrecke benutzt werden können, um Prognosen für eine noch zu befahrende Fahrstrecke zu erstellen.

In FIG. 6 ist eine schematische Darstellung eines Fahrzeugs auf einer Fahrstrecke gezeigt, bei dem ein Fahrzeug einen Abschnitt einer Fahrstrecke bereits durchfahren hat. Aus den oben bereits erwähnten Fahrdaten, die für diesen bereits durchfahrenen Abschnitt gesammelt wurden (bzgl. des Fahrverhaltens des Fahrers und der Vielzahl weiterer Fahrer), werden paarweise für bereits durchfahrene und noch zu durchfahrene Abschnitte der Fahrstrecke zeitnahe oder zeitlich kohärente Fahrdaten verglichen und beispielsweise statistische Modell erstellt. Dies kann zum Beispiel über ein maschinelles Lernen, wie beispielsweise einer Regression erfolgen. Das heißt, ein Lernen erfolgt basierend auf Fahrdaten bereits durchfahrener Abschnitte der Fahrstrecke und kann dann für noch zu durchfahrene Abschnitte der Fahrstrecke angewendet werden. Dies wird im Folgenden näher erläutert.

Beispielsweise werden Fahrdaten über das Fahrverhalten einer Vielzahl von Fahrern in einem ersten Schritt über einen ersten Abschnitt (Abschnitt 1) der Fahrstrecke gesammelt, wobei sich die Fahrzeuge mit einer durchschnittlichen Geschwindigkeit für den ersten Abschnitt bewegen. In einem zweiten Schritt wird ein statistisches Modell für die Berechnung der Abbildung: Vo(Abschnitt 1) --> Vo(Abschnitt 2) für den ersten Abschnitt und den zweiten Abschnitt verwendet, wobei Vø die durchschnittliche Geschwindigkeit auf dem jeweiligen Abschnitt ist.

Auf Basis dieser Daten für eine Vielzahl von Fahrern kann ein Zusammenhang zwischen den Durchschnittsgeschwindigkeiten der Vielzahl von Fahrern auf dem Abschnitt 2 und den Durchschnittsgeschwindigkeiten der Vielzahl von Fahrern auf dem Abschnitt 1 ermittelt werden, beispielsweise ein linearer Zusammenhang. Hierfür kann eine lineare Regression verwendet werden: Vo(Abschnitt 2) = Vo(Abschnitt 1) * a - b, wobei a und b zu bestimmende Parameter sind.

Beispielwerte für Durchschnittsgeschwindigkeiten sind in der Tabelle 1 gezeigt. Die durchschnittlichen Geschwindigkeiten in der Tabelle 1 sind der jeweiligen Strecke für einen bestimmten Fahrer zugeteilt, der mit Fahrer ID bezeichnet wird. Für diese Durchschnittsgeschwindigkeiten ergibt sich z.B. a=0,945 und b=16,8. Die oben diskutierte Berechnung kann beispielsweise mittels oben diskutierter Anwendungen in einem Rechnernetz, wie dem in FIG. 3 gezeigten Rechnernetz 301, erfolgen. Eine verteilte Berechnung mittels Anwendungen ermöglicht die Analyse großer Datenmengen in Echtzeit. Eine flexible Erweiterung des Rechnernetzes ist ebenfalls denkbar.

Wenn nun für einen Fahrer - z.B. in Schritt 201 des Verfahrens 200 - die durchschnittliche Geschwindigkeit für den Abschnitt 1 bestimmt wird, kann mit Hilfe des statistischen Modells, z.B. der oben ermittelte Zusammenhang, demzufolge eine Vorhersage für die durchschnittliche Geschwindigkeit für den Abschnitt 2 abgeschätzt werden. Mittels dieser abgeschätzten Geschwindigkeit kann beispielsweise eine Geschwindigkeitsregelung eingestellt werden.

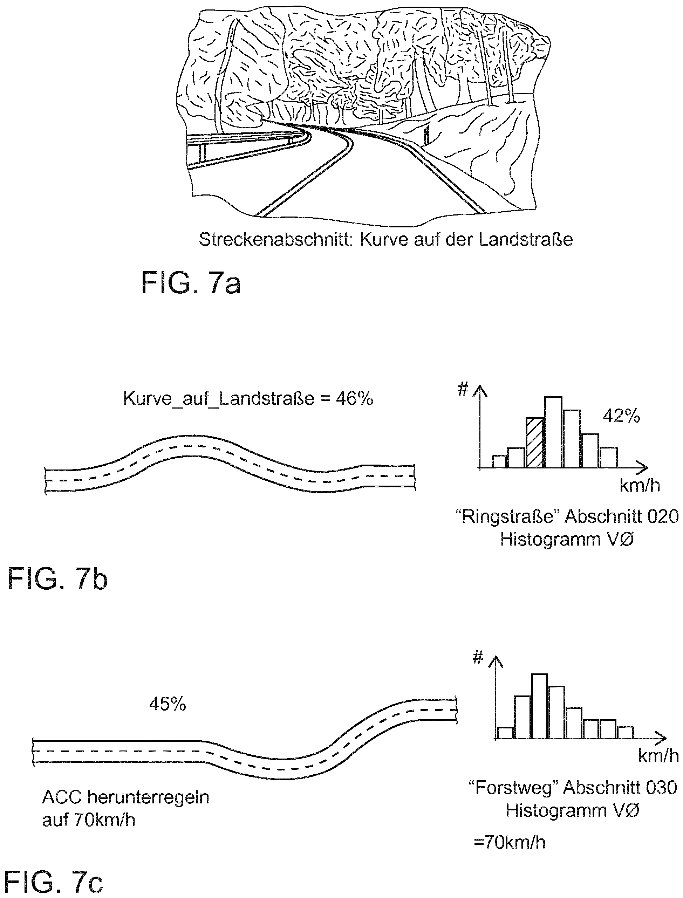

In Verbindung mit den Figuren 7a-7c wird nunmehr als weiteres Beispiel eine Parametrisierung einer adaptiven Geschwindigkeitsregelung (ACC) und eines Notbremsassistenten bei einer Kurvenfahrt auf einer Landstraße auf Basis eines Vergleichs mit anderen Fahrern auf einem gleichen Abschnitt der Fahrstrecke erläutert.

Die Parametrisierung eines ACC und eines Notbremsassistenten, die als Beispiel für Fahrerassistenzsysteme erläutert werden, erfolgt nach dem oben z.B. unter Bezugnahme auf FIG. 2 erläuterten Prinzip, das heißt dem abschnittsweisen Vergleich von Fahrdaten eines Fahrers mit den Fahrdaten anderer Fahrer.

Ein Notbremsassistent umfasst typischerweise ein Umfeldbeobachtungssystem, das mittels eines Sensors, zum Beispiel eines Radars und/oder Lasers kritische Abstandssituationen erkennt und hilft, den Anhalteweg eines Fahrzeugs zu verkürzen. In einer Gefahrensituation warnt das System den Fahrer optisch und/oder akustisch und/oder mit einem Bremsruck. Der Notbremsassistent arbeitet dabei unabhängig von dem ACC.

Eine solche Parametrisierung kann mit einem entsprechenden Rechnernetz, das oben bereits diskutiert wurde (z.B. 301 in FIG. 3) durchgeführt werden. In diesem Rechnernetz werden bei dem vorliegenden Beispiel von einer Vielzahl von Fahrern fortlaufend Datensätze zu durchfahrenen Abschnitten einer Fahrstrecke, die die oben erläuterten Fahrdaten umfassen, mit dem folgenden Inhalt gesammelt: Zeitpunkt, an dem ein Fahrzeug einen bestimmten Abschnitt der Fahrstrecke passiert, Geschwindigkeit, Motorisierung des jeweiligen Fahrzeugs kW/kg, Fahrzeugtyp (z.B. SUV, Sportwagen usw.), Regen/kein Regen (wie z.B. anhand des Scheibenwischers festgestellt werden kann), Werktag/Sonntag, Folgefahrt/freie Fahrt (was über eine Auswertung mittels eines Radars ermittelt werden kann). Die Daten können in dem Rechnernetz anonym gespeichert und verarbeitet werden.

Ein Fahrzeug eines ersten Fahrers, der beispielsweise eine Kurve, wie die in FIG. 7a-7c gezeigte Kurve passiert, sendet dann die entsprechenden Fahrdaten an das Rechnernetz. In dem Rechnernetz wird mittels spezieller Anwendungen ein Histogramm, das die Geschwindigkeit auf dem gleichen Abschnitt der Strecke in einer vergleichbaren Fahrsituation umfasst, erstellt.

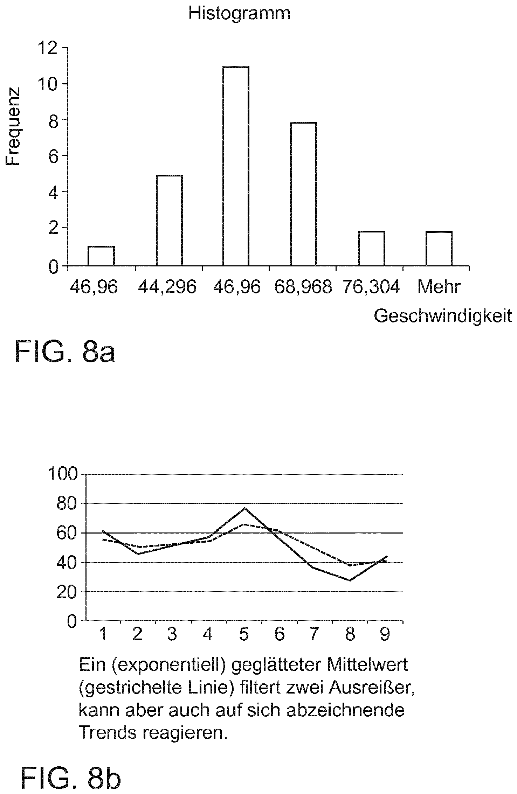

Ein Beispiel für ein solches Histogramm ist in FIG. 8a gezeigt. Zum Vergleich werden hier die folgenden Fahrdaten berücksichtigt: zeitliche Nähe, Motorisierung kW/kg, Regen/kein Regen, Werktag/Sonntag, Folgefahrt/freie Fahrt.

In dem Rechnernetz, wie dem in FIG. 3 gezeigten Rechnernetz 301, wird dann z.B. berechnet, dass der erste Fahrer mit seiner Geschwindigkeit bei 42% des Spektrums der Vielzahl von Fahrern liegt, also im unteren Mittelfeld. Bei anderen Ausführungsformen kann diese Berechnung im Fahrzeug erfolgen.

Dieses, den ersten Fahrer persönlich betreffende Ergebnis wird nicht in dem Rechnernetz gespeichert, sondern ausschließlich an ein Fahrerassistenzsystem des Fahrzeugs des ersten Fahrers übermittelt. Damit wurde eine Profilierung des ersten Fahrers vorgenommen. Das Fahrverhalten des ersten Fahrers wurde mit dem Fahrverhalten anderer Fahrer verglichen, ohne dass man die Fahrdaten des ersten Fahrers zunächst durch das Herausrechnen der Merkmale der Fahrsituation auf eine "Normalform" hätte bringen müssen. Dies liegt daran, dass für den Vergleich einander entsprechende Fahrsituationen herangezogen werden.

Das Fahrerassistenzsystem, z.B. das obige ACC oder der Notbremsassistent, aktualisiert mit diesem Ergebnis einen Parameter, der eine Kurvenfahrt definiert, wobei der Wert für den Parameter für das obige Beispiel 45% beträgt. Dies erfolgt nach dem oben bereits erwähnten Prinzip des exponentiell geglätteten Mittelwerts. Ein Beispiel für einen exponentiell geglätteten Mittelwert wird in FIG. 8b gezeigt, wobei die dunkelgraue Linie dem geglätteten Mittelwert und die hellgraue Linie dem Mittelwert entspricht.

Mit diesem beschriebenen Verfahren werden Trendwenden z.B. der Geschwindigkeit angemessen abgebildet. Außerdem kann die Berechnung effizient implementiert werden.

In einem weiteren Beispiel nähert sich ein Fahrzeug der Kurve und das Fahrerassistenzsystem sendet eine Anfrage an das Rechnernetz, um die obigen Fahrdaten zu erhalten. Neben diesen Fahrdaten wird das Fahrerassistenzsystem zusätzlich die Information erhalten, dass der Wert für den Parameter für diese Kurve 45% beträgt.

Das Rechnernetz erstellt dann mittels der Anwendungen in dem Rechnernetz für die kommende Kurve ein Histogramm mit den gegebenen Parametern und berechnet, wie schnell der Fahrer im Bereich von 45% ist.

So berechnet das Rechnernetz die Geschwindigkeit bei 45% des Spektrums, was in diesem Fall z.B. 70 km/h ist. Dieses Ergebnis wird an das Fahrerassistenzsystem des Fahrzeugs gesendet, womit der ACC automatisch eingestellt werden kann, so dass die Kurve mit den für den ersten Fahrer komfortablen bzw. passenden 70 km/h durchfahren wird.

Optional kann das Fahrerassistenzsystem dem ersten Fahrer anzeigen, dass die Geschwindigkeit des ACC in der entsprechenden Kurve abgesenkt wird, wenn der erste Fahrer vorher schneller fährt.

Ein weiteres Beispiel bezieht sich auf einen dynamischen ACC. Der erste Fahrer fährt mit einer Geschwindigkeit von 110 km/h auf der Straße und schaltet den ACC manuell ein.

Das Fahrerassistenzsystem kommuniziert mit dem Rechnernetz und ermittelt den Wert 42%, das heißt der Fahrer fährt hier schneller als 42% aller anderen Fahrer, wobei es sich hierbei um zeitnahe Fahrdaten handelt.

Vor dem nächsten Abschnitt der Fahrstrecke erfolgt eine Abfrage des Fahrerassistenzsystems über die Geschwindigkeit, die schneller als 42% aller anderen Fahrer ist. Von dem Rechnernetz erhält das Fahrerassistenzsystem die Information, dass die Geschwindigkeit 115 km/h beträgt. Für den nächsten Abschnitt der Fahrstrecke regelt der ACC auf eine Geschwindigkeit von 115 km/h hoch.

Bei einem weiteren Beispiel wird auf einem Abschnitt der Fahrstrecke durch eine Baustelle, eines Wolkenbruchs oder aufgrund anderer Umstände dem Fahrerassistenzsystem plötzlich eine viel niedrigere Geschwindigkeit angezeigt. In dem Fahrerprofil werden nur relative Fahrwerte gespeichert, die tatsächliche Geschwindigkeit orientiert sich jedoch an dem Spektrum der letzten auf dem Abschnitt gefahrenen Geschwindigkeiten.

Bei hohem Verkehrsaufkommen verzögert der ACC in einem anderen Beispiel automatisch auf einen bestimmten Abstand zum vorausfahrenden Fahrzeug, falls dieses langsamer fährt. Außerdem werden hier keine sog. "Fahrstil-Parameter" "gelernt", weil bei einem hohen Verkehrsaufkommen der Anteil des situativen Verhaltens überwiegt (d.h. der Fahrer reagiert auf andere Fahrzeuge) und der Anteil eigenständigen Verhaltens sehr gering ist.

In einem weiteren Beispiel können mehrere Routen-Verläufe antizipiert werden. In diesem Fall werden für alle möglichen folgenden Abschnitte der Fahrstrecke in einem bestimmten Umkreis die passenden Parameter für das Fahrerassistenzsystem und/oder das ACC berechnet.

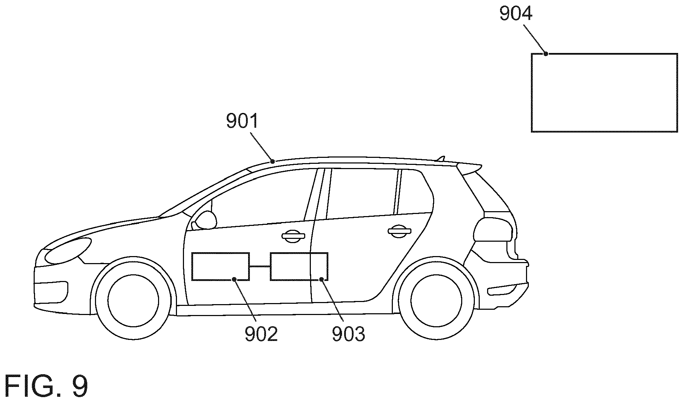

Die oben beschriebenen Verfahren und Steuerungseinrichtungen können beispielsweise in einem Fahrzeug implementiert sein. Dies ist in FIG. 9 gezeigt. Die FIG. 9 zeigt eine Steuerungseinrichtung 902, die in einem Fahrzeug 901 integriert sein kann. Die Steuerungseinrichtung kann dabei beispielsweise ein Fahrerassistenzsystem oder ein ACC, wie oben bereits diskutiert, sein oder diese ansteuern. Die oben beschriebenen Verfahren können in der Steuerungseinrichtung implementiert sein.

Die in Verbindung mit FIG. 2 diskutierten ersten und zweiten Informationen können dabei, wie in FIG. 9 gezeigt, an eine externe Verarbeitungseinrichtung 904 gesendet werden und/oder von der externen Verarbeitungseinrichtung 904 empfangen werden.

Das in FIG. 9 gezeigte System kann in allen entsprechend ausgerüsteten Fahrzeugen, z.B. mit einem Fahrzeugcomputer, Fahrassistenz- und Navigationssystemen und einer Online-Anbindung, verwendet werden.

### Bezugszeichenliste

- 101: Parametrisierung Fahrassistenzsystem
- 102: Fahrerprofil
- 103: Handlungsspielraum bzw. Situation
- 104: Beobachtete Fahrerdaten
- 200: Verfahren
- 201-205: Verfahrensschritte
- 301: Rechnernetz
- 302: Fahrzeug
- 303: Fahrstrecke
- 401: Fahrstrecke
- 402: Fahrzeug 1
- 403: Fahrzeug 2
- 901: Fahrzeug
- 902: Steuerungseinrichtung
- 903: Fahrerassistenzsystem
- 904: externe Verarbeitungseinrichtung

## Patentansprüche

1. Verfahren zum Steuern von Funktionen in einem Fahrzeug, umfassend:
- Bestimmen (201) eines Fahrverhaltens eines Fahrers, und
- Bereitstellen (202) eines Fahrverhaltens einer Vielzahl von weiteren Fahrern, **dadurch gekennzeichnet, dass** das Verfahren weiter umfasst:
- Auswerten (203) des Fahrverhaltens des einen Fahrers basierend auf dem Fahrverhalten der Vielzahl von weiteren Fahrern für mindestens eine spezifische Fahrsituation, indem das Fahrverhalten des Fahrers bei der mindestens einen spezifischen Fahrsituation damit verglichen wird, wie sich die weiteren Fahrer in derselben Fahrsituation verhalten haben, und
- Ansteuern (204) von Funktionen im Fahrzeug, die von einem Fahrerassistenzsystem (903) gesteuert werden, basierend auf dem Auswerten, wobei das Fahrerassistenzsystem (903) elektronische Zusatzeinrichtungen in dem Fahrzeug zur Unterstützung des Fahrers in bestimmten Fahrsituationen ansteuert.

2. Verfahren nach Anspruch 1, **dadurch gekennzeichnet, dass** das Verfahren weiter umfasst:
- Senden (205) von ersten Informationen über das Fahrverhalten des einen Fahrers an eine
externe Verarbeitungseinrichtung (904) und/oder an mindestens ein weiteres Fahrzeug, und/oder
dass das Bereitstellen des Fahrverhaltens der Vielzahl weiterer Fahrer umfasst:
- Empfangen von zweiten Informationen über das Fahrverhalten der Vielzahl von weiteren Fahrern von der externen Verarbeitungseinrichtung (904) und/oder von mindestens einem weiteren Fahrzeug.

3. Verfahren nach Anspruch 1 oder 2, **dadurch gekennzeichnet, dass** das Bestimmen des Fahrverhaltens eines Fahrers und/oder das Bereitstellen des Fahrverhaltens der Vielzahl von Fahrern für Abschnitte einer Fahrstrecke (303; 401) erfolgt.

4. Verfahren nach Anspruch 3, **dadurch gekennzeichnet, dass** dritte Informationen, die von einem Fahrverhalten unabhängige Informationen über die Abschnitte der Fahrstrecke (303; 401) umfassen, bereitgestellt werden, und dass das Auswerten basierend auf den dritten Informationen erfolgt.

5. Verfahren nach Anspruch 4, **dadurch gekennzeichnet, dass** die dritten Informationen an die externe Verarbeitungseinrichtung (904) gesendet werden und/oder von der externen Verarbeitungseinrichtung empfangen werden.

6. Verfahren nach einem der Ansprüche 1-5, **dadurch gekennzeichnet, dass** das Fahrverhalten der Vielzahl von weiteren Fahrern und/oder die dritten Informationen innerhalb einer vorgegebenen Zeitspanne und/oder innerhalb eines vorgegebenen Zeitfensters bezüglich einer Zeit des Fahrverhaltens des Fahrers ausgewertet werden.

7. Verfahren nach einem der vorhergehenden Ansprüche, **dadurch gekennzeichnet, dass** das Auswerten weiter umfasst:
- Vergleichen des Fahrverhaltens des einen Fahrers mit dem Fahrverhalten der Vielzahl von weiteren Fahrern bei einem erstmaligen Durchfahren eines Abschnitts einer Fahrstrecke, wobei das Verfahren weiter umfasst:
- Erstellen eines fahrerspezifischen Profils, basierend auf dem Vergleich.

8. Verfahren nach Anspruch 7, **dadurch gekennzeichnet, dass** das Verfahren weiter umfasst: Erfassen, inwiefern sich das fahrerspezifische Profil bei jedem weiteren Durchfahren des Abschnitts der Fahrstrecke (303; 401) ändert, wobei die Funktionen des Fahrzeugs bei jedem weiteren, erneuten Durchfahren des Abschnitts der Fahrstrecke (303; 401) in Abhängigkeit von dem Erfassen angesteuert werden.

9. Verfahren nach Anspruch 8, **dadurch gekennzeichnet, dass** das Verfahren weiter umfasst: Abschätzen, inwiefern sich das fahrerspezifische Profil für einen weiteren, noch nicht durchfahrenen Abschnitt der Fahrstrecke (303; 401) ändert, in Abhängigkeit von einem statistischen Modell, und Ansteuern der Funktionen basierend auf dem Abschätzen.

10. Verfahren nach Anspruch 9, **dadurch gekennzeichnet, dass** das statistische Modell auf dem fahrerspezifischen Profil eines bereits durchfahrenen Abschnitts der Fahrstrecke (303; 401) beruht.

11. Vorrichtung zum Steuern von Funktionen in einem Fahrzeug, umfassend:
eine Steuerungseinrichtung (902), die eingerichtet ist, ein Fahrverhalten eines Fahrers zu bestimmen,
**dadurch gekennzeichnet,**
**dass** die Steuerungseinrichtung (902) weiter eingerichtet ist,
das Fahrverhalten des einen Fahrers basierend auf einem Fahrverhalten einer Vielzahl von weiteren Fahrern für mindestens eine spezifische Fahrsituation auszuwerten, indem das Fahrverhalten des Fahrers bei der mindestens einen spezifischen Fahrsituation damit verglichen wird, wie sich die weiteren Fahrer in derselben Fahrsituation verhalten haben, und Funktionen im Fahrzeug basierend auf dem Auswerten anzusteuern,
**dass** die Steuerungseinrichtung (902) ein Fahrerassistenzsystem (903) umfasst, wobei das Fahrerassistenzsystem (903) ausgestaltet ist, um elektronische Zusatzeinrichtungen in dem Fahrzeug zur Unterstützung des Fahrers in bestimmten Fahrsituationen anzusteuern.

12. Verfahren nach einem der Ansprüche 1-10, **dadurch gekennzeichnet, dass** das Auswerten des Fahrverhaltens des einen Fahrers basierend auf dem Fahrverhalten der Vielzahl von weiteren Fahrern für die mindestens eine spezifische Fahrsituation von einer externen Verarbeitungseinrichtung (904) ausgeführt wird, welche zusätzlich Parameter zur Ansteuerung der Funktionen im Fahrzeug basierend auf dem Auswerten berechnet.

13. Verfahren nach Anspruch 7,
**dadurch gekennzeichnet,**
**dass** das Fahrerprofil einen Rang eines Fahrerdatums in einem Histogramm von Vergleichsdaten der weiteren Fahrer als Prozent-Angabe umfasst und zum Ansteuern der Funktionen im Fahrzeug verwendet wird, oder
**dass** das Fahrerprofil ein Verhältnis eines Fahrerdatums des Fahrers zu einem Mittelwert oder einer Standardabweichung einer Verteilung der Fahrerdaten der weiteren Fahrer umfasst und zum Ansteuern der Funktionen im Fahrzeug verwendet wird.

## Claims

1. Method for controlling functions in a vehicle, comprising:
- determining (201) a driving behavior of a driver, and
- providing (202) a driving behavior of a plurality of further drivers,
**characterized in that** the method further comprises:
- evaluating (203) the driving behavior of the one driver on the basis of the driving behavior of the plurality of further drivers for at least one specific driving situation by comparing the driving behavior of the driver in the at least one specific driving situation with the way the further drivers have behaved in the same driving situation, and
- controlling (204) functions in the vehicle that are controlled by a driver assistance system (903) on the basis of the evaluation, the driver assistance system (903) controlling electronic additional devices in the vehicle for assisting the driver in certain driving situations.

2. Method according to claim 1, **characterized in that** the method further comprises:
- sending (205) initial information about the driving behavior of the one driver to an
external processing device (904) and/or to at least one further vehicle, and/or
**in that** providing the driving behavior of the plurality of further drivers comprises:
- receiving a second piece of information about the driving behavior of the plurality of further drivers from the external processing device (904) and/or from at least one further vehicle.

3. Method according to either claim 1 or claim 2, **characterized in that** the determination of the driving behavior of a driver and/or the provision of the driving behavior of the plurality of drivers takes place for portions of a route (303; 401).

4. Method according to claim 3, **characterized in that** a third piece of information is provided comprising information about the portions of the route (303; 401) that is independent of a driving behavior, **and in that** the evaluation takes place on the basis of the third piece of information.

5. Method according to claim 4, **characterized in that** the third piece of information is sent to the external processing device (904) and/or received from the external processing device.

6. Method according to any of claims 1-5, **characterized in that** the driving behavior of the plurality of further drivers and/or the third piece of information are evaluated within a predefined time span and/or within a predefined time window with respect to a time of the driving behavior of the driver.

7. Method according to any of the preceding claims, **characterized in that** the evaluation further comprises:
- comparing the driving behavior of the one driver with the driving behavior of the plurality of further drivers when driving through a portion of a route for the first time, the method further comprising:
- creating a driver-specific profile on the basis of the comparison.

8. Method according to claim 7, **characterized in that** the method further comprises: detecting to what extent the driver-specific profile changes during each further driving-through of the portion of the route (303; 401), the functions of the vehicle being controlled depending on the detection during each further driving-through of the portion of the route (303; 401).

9. Method according to claim 8, **characterized in that** the method further comprises: estimating to what extent the driver-specific profile changes for a further portion of the route (303; 401) that is not yet driven through, depending on a statistical model, and controlling the functions on the basis of the estimation.

10. Method according to claim 9, **characterized in that** the statistical model is based on the driver-specific profile of an already driven-through portion of the route (303; 401).

11. Device for controlling functions in a vehicle, comprising:
a control device (902) configured to determine a driving behavior of a driver,
**characterized in that**
the control device (902) is further configured to evaluate
the driving behavior of the one driver on the basis of a driving behavior of a plurality of further drivers for at least one specific driving situation by comparing the driving behavior of the driver in the at least one specific driving situation with the way the further drivers have behaved in the same driving situation, and to control functions in the vehicle on the basis of the evaluation,
the control device (902) comprises a driver assistance system (903), the driver assistance system (903) being designed to control electronic additional devices in the vehicle for assisting the driver in certain driving situations.

12. Method according to any of claims 1-10, **characterized in that** the evaluation of the driving behavior of the one driver on the basis of the driving behavior of the plurality of further drivers for the at least one specific driving situation is executed by an external processing device (904) which additionally calculates parameters for controlling the functions in the vehicle on the basis of the evaluation.

13. Method according to claim 7,
**characterized in that**
the driver profile comprises a rank of a driver datum in a histogram of comparison data of the further drivers as a percentage and is used to control the functions in the vehicle, or
the driver profile comprises a ratio of a driver datum to an average value or a standard deviation of a distribution of the driver data of the further drivers and is used to control the functions in the vehicle.

## Revendications

1. Procédé permettant la commande de fonctions dans un véhicule, comprenant :
- la détermination (201) d'un comportement de conduite d'un conducteur, et
- la fourniture (202) d'un comportement de conduite d'une pluralité d'autres conducteurs,
**caractérisé en ce que** le procédé comprend en outre :
- l'évaluation (203) du comportement de conduite du conducteur sur la base du comportement de conduite de la pluralité d'autres conducteurs pour au moins une situation de conduite spécifique par le fait que le comportement de conduite du conducteur dans l'au moins une situation de conduite spécifique est comparé avec la manière avec laquelle les autres conducteurs se sont comportés dans la même situation de conduite, et
- l'activation (204) de fonctions dans le véhicule, lesquelles sont commandées par un système d'assistance au conducteur (903), sur la base de l'évaluation, dans lequel le système d'assistance au conducteur (903) active des appareils supplémentaires électroniques dans le véhicule pour soutenir le conducteur dans des situations de conduite déterminées.

2. Procédé selon la revendication 1, **caractérisé en ce que** le procédé comprend en outre :
- l'envoi (205) de premières informations sur le comportement de conduite du conducteur à un appareil de traitement externe (904) et/ou à au moins un autre véhicule, et/ou
**en ce que** la fourniture du comportement de conduite de la pluralité d'autres conducteurs comprend :
- la réception de deuxièmes informations sur le comportement de conduite de la pluralité d'autres conducteurs en provenance de l'appareil de traitement externe (904) et/ou d'au moins un autre véhicule.

3. Procédé selon la revendication 1 ou 2, **caractérisé en ce que** la détermination du comportement de conduite d'un conducteur et/ou la fourniture du comportement de conduite de la pluralité de conducteurs sont effectuées pour des sections d'un trajet de conduite (303 ; 401).

4. Procédé selon la revendication 3, **caractérisé en ce que** des troisièmes informations, lesquelles comprennent des informations indépendantes d'un comportement de conduite sur les sections du trajet de conduite (303 ; 401), sont fournies, **et que** l'évaluation est effectuée sur la base des troisièmes informations.

5. Procédé selon la revendication 4, **caractérisé en ce que** les troisièmes informations sont envoyées à l'appareil de traitement externe (904) et/ou sont reçues en provenance de l'appareil de traitement externe.

6. Procédé selon l'une des revendications 1 à 5, **caractérisé en ce que** le comportement de conduite de la pluralité d'autres conducteurs et/ou les troisièmes informations sont évalués pendant un laps de temps prédéfini et/ou pendant une fenêtre de temps prédéfinie par rapport à un temps du comportement de conduite du conducteur.

7. Procédé selon l'une des revendications précédentes,
**caractérisé en ce que** l'évaluation comprend en outre :
- la comparaison du comportement de conduite du conducteur avec le comportement de conduite de la pluralité d'autres conducteurs lors d'une première traversée d'une section d'un trajet de conduite, dans lequel le procédé comprend en outre :
- la création d'un profil spécifique au conducteur sur la base de la comparaison.

8. Procédé selon la revendication 7, **caractérisé en ce que** le procédé comprend en outre : la détection de la mesure dans laquelle le profil spécifique au conducteur change à chaque traversée supplémentaire de la section du trajet de conduite (303 ; 401), dans lequel les fonctions du véhicule sont activées pour chaque nouvelle traversée supplémentaire de la section du trajet de conduite (303 ; 401) en fonction de la détection.

9. Procédé selon la revendication 8, **caractérisé en ce que** le procédé comprend en outre : l'estimation de la mesure dans laquelle le profil spécifique au conducteur change pour une section supplémentaire pas encore traversée du trajet de conduite (303 ; 401) en fonction d'un modèle statistique, et l'activation des fonctions sur la base de l'estimation.

10. Procédé selon la revendication 9, **caractérisé en ce que** le modèle statistique est fondé sur le profil spécifique au conducteur d'une section déjà traversée du trajet de conduite (303 ; 401).

11. Dispositif permettant de commander des fonctions dans un véhicule, comprenant :
un appareil de commande (902) qui est configuré pour déterminer un comportement de conduite d'un conducteur,
**caractérisé en ce que**
l'appareil de commande (902) est en outre configuré pour évaluer le comportement de conduite du conducteur sur la base d'un comportement de conduite d'une pluralité d'autres conducteurs pour au moins une situation de conduite spécifique par le fait que le comportement de conduite du conducteur dans l'au moins une situation de conduite spécifique est comparé avec la manière avec laquelle les autres conducteurs se sont comportés dans la même situation de conduite, et pour activer des fonctions dans le véhicule sur la base de l'évaluation,
**que** l'appareil de commande (902) comprend un système d'assistance au conducteur (903), dans lequel le système d'assistance au conducteur (903) est configuré pour activer des appareils supplémentaires électroniques dans le véhicule pour soutenir le conducteur dans des situations de conduite déterminées.

12. Procédé selon l'une des revendications 1 à 10, **caractérisé en ce que** l'évaluation du comportement de conduite du conducteur est réalisée sur la base du comportement de conduite de la pluralité d'autres conducteurs pour l'au moins une situation de conduite spécifique par un appareil de traitement externe (904), lequel calcule des paramètres supplémentaires pour l'activation des fonctions dans le véhicule sur la base de l'évaluation.

13. Procédé selon la revendication 7,
**caractérisé en ce que**
le profil de conducteur comprend un rang d'une donnée de conducteur dans un histogramme de données comparatives des autres conducteurs sous forme d'indication en pourcentage et est utilisé pour l'activation des fonctions dans le véhicule, ou
**que** le profil de conducteur comprend un rapport entre une donnée de conducteur du conducteur et une moyenne ou un écart type d'une distribution des données de conducteur des autres conducteurs et est utilisé pour l'activation des fonctions dans le véhicule.
